Europäisches Patentamt

European Patent Office

Office européen des brevets

(19)

(11) Numéro de publication : **0 021 922
B1**

# FASCICULE DE BREVET EUROPÉEN

(12)

(45) Date de publication du fascicule du brevet :
**26.09.84**

(51) Int. Cl.³ : **C 22 B   7/02**

(21) Numéro de dépôt : **80400806.8**

(22) Date de dépôt : **05.06.80**

(54) **Procédé et dispositif de traitement hydrométallurgique des poussières métallurgiques et application de ce procédé ou de ce dispositif au traitement des poussières de hauts fourneaux.**

(30) Priorité : **15.06.79 FR 7915623**

(43) Date de publication de la demande :
**07.01.81 Bulletin 81/01**

(45) Mention de la délivrance du brevet :
**26.09.84 Bulletin 84/39**

(84) Etats contractants désignés :
**BE DE GB IT LU NL**

(56) Documents cités :
**EP-A- 0 003 464
FR-A-   848 049
FR-A- 1 381 999
FR-A- 2 299 089
US-A- 3 149 964
US-A- 3 375 069
US-A- 4 134 755
Ullmanns Enzyklopädie der technischen Chemie,
Band 2, vierte Auflage, page 141**

(73) Titulaire : **INSTITUT DE RECHERCHES DE LA SIDE-
RURGIE FRANÇAISE (IRSID) France
185, rue Président Roosevelt
F-78105 Saint-Germain-en-Laye (FR)**

(72) Inventeur : **Pazdej, Richard
22, rue Pasteur
F-57210 Maisieres-les-Metz (FR)**

(74) Mandataire : **Tuppin, Claude
185, rue Président Roosevelt
F-78105 Saint-Germain-en-Laye (FR)**

EP 0 021 922 B1

**Description**

La présente invention concerne le traitement hydrométallurgique des poussières métallurgiques, par lixiviation en vue de la séparation et de la récupération des éléments utiles qui y sont contenus, à savoir le zinc, le plomb ou le fer.

Le traitement hydrométallurgique des poussières métallurgiques et, plus particulièrement sidérurgiques, par lixiviation — généralement à l'acide sulfurique — a rencontré jusqu'ici deux types de difficultés.

La première est la mise en solution d'une partie du fer qui conduit à une consommation élevée d'acide et fournit, après séparation solide-liquide, un filtrat où le zinc en présence de fer plus électronégatif, pose des problèmes de récupération par électrolyse (voir par exemple US-A-3 375 069). La seconde est due au fait que le sulfate de plomb formé pendant l'attaque acide est insoluble et se retrouve ainsi dans la charge solide mélangé au fer, après séparation solide-liquide et pose alors un problème de réemploi, notamment en sidérurgie.

Le but de la présente invention est de proposer une solution à ces difficultés.

A cet effet, l'invention a pour objet un procédé de traitement hydrométallurgique des poussières métallurgiques contenant entre autres du fer, du zinc et du plomb, procédé comprenant une lixiviation dans un solvant acide, et une séparation solide-liquide ultérieure. La phase de lixiviation est réalisée avec un solvant acide ne mettant pas le plomb en solution et avec un pH de la solution acide en fin de réaction d'environ 4 ou 5, et on effectue une étape supplémentaire de séparation solide-solide dans laquelle une phase solide contenant du plomb est séparée de la phase solide contenant du fer.

Cette étape peut être située, conformément à deux variantes distinctes de l'invention, soit de façon intermédiaire entre la phase de lixiviation et la phase de séparation liquide-solide, soit après cette dernière, laquelle est alors complétée par un repulpage, par exemple aqueux, de la fraction solide.

L'invention a également pour objet un dispositif pour la mise en œuvre du procédé comprenant en série un lixiviateur — ou bac de lixiviation —, un séparateur solide-liquide et un séparateur solide-solide.

Conformément à deux formes possibles de réalisation du dispositif, appropriées respectivement aux deux variantes de mise en œuvre du procédé, l'agencement des éléments constitutifs du dispositif, par rapport à l'ordre des opérations successives du traitement des poussières, présente soit la séquence lixiviateur → séparateur solide-solide → séparateur, solide-liquide, soit la séquence lixiviateur → séparateur solide liquide → séparateur solide-solide.

Comme on le comprend, l'invention consiste donc, dans ses caractéristiques fondamentales :

— à effectuer une attaque acide modérée sur les poussières, ce qui permet de transformer en sels les oxydes de zinc et de plomb, ainsi qu'éventuellement à réduire ces éléments sous forme métallique, et ceci sans toucher sensiblement au fer. A cette fin, le pH de la solution en fin de réaction ne doit pas être inférieur à environ 4 ou 5. En principe, tous les acides minéraux conviennent dans la mesure où ils procurent une mise en solution du zinc mais non du plomb, ce qui exclut en particulier l'acide nitrique. On sait que, dans le domaine de l'hydrométallurgie du zinc, c'est l'acide sulfurique qui s'est imposé. De même, dans le cadre de l'invention, l'acide utilisé est de préférence l'acide sulfurique et sera considéré comme tel dans la suite, sauf indications contraires.

— à effectuer ensuite sur le produit obtenu une séparation solide-solide ou exprimé différemment, une séparation solide-liquide imparfaite. En effet, si la séparation solide-liquide du produit issu de l'attaque acide est effectuée de façon parfaite (clarificateur ou filtre), le sulfate de plomb reste avec le solide non attaqué. Conformément à l'invention, une séparation imparfaite extrait le sulfate de plomb du solide en partageant le mélange initial en deux phases : une phase pulpeuse épaisse constituée essentiellement par le solide non attaqué et une phase liquide contenant le sulfate en suspension. Cette séparation solide (pulpe)-solide (en suspension) peut s'effectuer par les techniques industrielles habituelles, comme la floculation sélective qui procure une décantation préférentielle d'une espèce par rapport à l'autre. Cependant, si les espèces à séparer sont déjà bien différenciées physiquement dans le liquide, comme c'est le cas du sulfate de plomb qui se présente sous forme très divisée, ou du moins sensiblement plus divisée que le solide non attaqué, on fera appel de préférence à la technique de séparation granulométrique humide, par exemple au moyen d'un hydrocyclonage habituel, ou toute autre technique appropriée à une telle fonction (hydrosizer, tamis, etc...). On a vu que, conformément à une variante de l'invention, la séparation solide-solide peut s'effectuer non plus sur le mélange solide-solution acide initiale, mais sur un produit reconditionné obtenu après une étape intermédiaire de séparation parfaite du mélange initial et de traitement du résidu solide par de l'eau d'appoint pour en faire une pulpe apte à subir la classification humide.

Les avantages et inconvénients respectifs des variantes de réalisation seront brièvement exposés par la suite. Il doit être compris auparavant que l'expression précédemment utilisée « séparation solide-liquide » (ou « séparateur solide-liquide ») signifie bien entendu, en l'absence de précision complémentaire, une séparation solide-liquide parfaite, c'est-à-dire une opération destinée à procurer un liquide clair. Selon la pratique industrielle courante, une telle opération consiste en une décantation suivie éventuellement d'une filtration de la pulpe décantée et complétée le cas échéant par une recirculation du filtrat au niveau de l'opération de décantation.

On va maintenant décrire plus en détails deux exemples de mise en œuvre de l'invention en se référant aux planches de dessins annexées sur lesquelles :

2

# 0 021 922

la figure 1 est un schéma de principe du traitement des boues de haut fourneau sidérurgique selon la variante consistant à réaliser la séparation solide-solide directement après la lixiviation,

la figure 2 est également un schéma de principe du traitement des boues de hauts fourneaux mais selon la variante consistant à effectuer la séparation solide-solide après l'étape intermédiaire de séparation solide-liquide.

Sur les deux figures, les mêmes phases ou étapes du traitement sont désignées par des références identiques. La description est effectuée conformément à l'ordre chronologique des opérations de traitement.

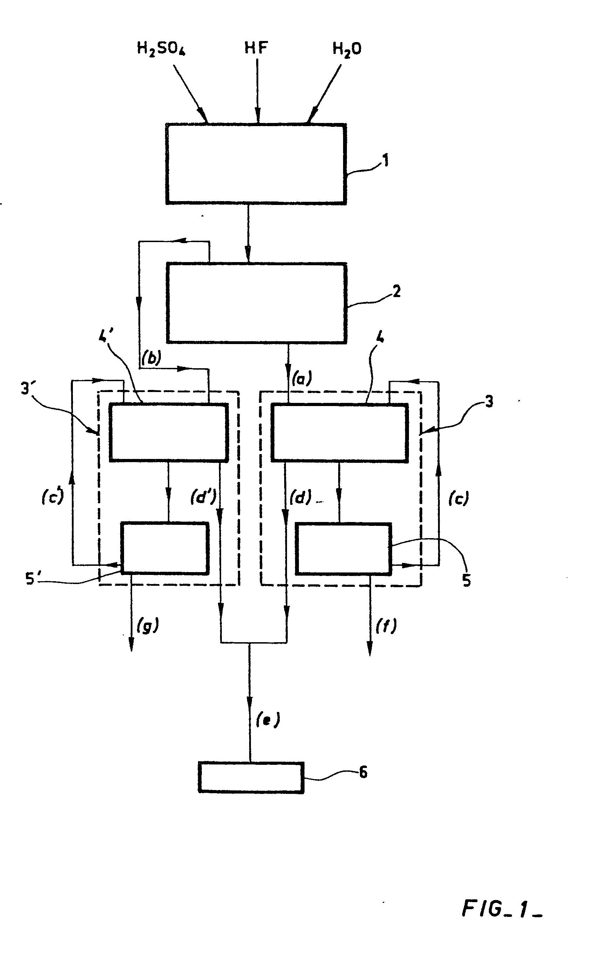

Comme on le voit sur la figure 1, les boues de haut fourneau récupérées à la suite du dépoussiérage des fumées du gueulard, sont traitées à l'acide sulfurique dans une phase initiale de lixiviation référencée en 1. Un apport d'eau d'appoint peut être nécessaire pour diluer l'acide, notamment lorsque celui-ci est utilisé à forte concentration ou même pur (36 N). Conformément à l'invention, l'attaque acide doit être « modérée », c'est-à-dire que le pH de la solution en fin de réaction ne doit pas être inférieur à 4 ou 5 environ.

Le contrôle du pH de fin de réaction se fait de la manière habituelle par un pHmètre ou, de façon plus rudimentaire, au moyen d'un « papier tournesol », ou de toute autre manière.

Dans ces conditions, le fer et ses composés contenus dans les boues ne sont pratiquement pas attaqués et seuls le zinc et le plomb, présents sous forme oxydée, se transforment en sulfate.

Le résultat de la lixiviation 1 est donc un mélange solide-liquide, le solide étant constitué essentiellement par le fer (et ses composés) et par le sulfate de plomb insoluble qui, formé au cours de la réaction, se présente donc sous forme très divisée par rapport au fer, le liquide étant la solution acide de sulfate de zinc.

Ce mélange est alors soumis à une séparation solide-solide, effectuée en 2 par classification granulométrique, destinée à séparer les petites particules de sulfate de plomb des fragments ferrifères plus grossiers. Cette opération de classification peut aisément être réalisée par un hydrocyclonage classique dont le seuil de séparation granulométrique est réglé en conséquence. On recueille à la sortie deux types de mélange solide-liquide séparés : la « sous-verse » constituée d'une pulpe ferrifère contenant une faible partie de la solution acide initiale de sulfate de zinc, la « surverse » composée d'une suspension des particules de sulfate de plomb dans la solution de sulfate de zinc qui se retrouvent ici en quasi-totalité.

La sous-verse, référencée (a) sur les figures, et la sur-verse, référencée (b), sont alors traitées chacune dans une phase de séparation solide-liquide réprésentée en traits discontinus et désignées respectivement par 3 et 3'. Ces phases 3 et 3' sont identiques entre elles et comprennent, de la manière habituelle, deux étages de traitement successifs : un étage de décantation 4 (respectivement 4'), suivi d'un étage de filtration 5 (respectivement 5') avec recyclage du filtrat, référence (c) et (c'), dans l'étage de décantation. On obtient à la sortie de chacun des deux étages de décantation 4 et 4' une fraction de la solution acide initiale de sulfate de zinc que l'on réunit en une solution unique (e).

On recueille par ailleurs à la sortie de l'étage de filtration 5 un gâteau ferrifère (f) et à la sortie de l'étage de filtration 5' un gâteau de sulfate de plomb (g).

La solution de zinc (e) peut avoir de multiples destinations, par exemple servir à la fabrication de sulfates destinés à l'agriculture, ou d'oxydes pour les peintures, ou, comme le montre la figure, être traitée dans un bac à électrolyse schématisée en 6 pour la récupération du zinc sous forme métallique après purification.

Le plomb récupéré dans le gâteau (g) peut trouver un débouché notamment en métallurgie non ferreuse.

Enfin, le fer contenu dans le gâteau (f) peut être recyclé en sidérurgie.

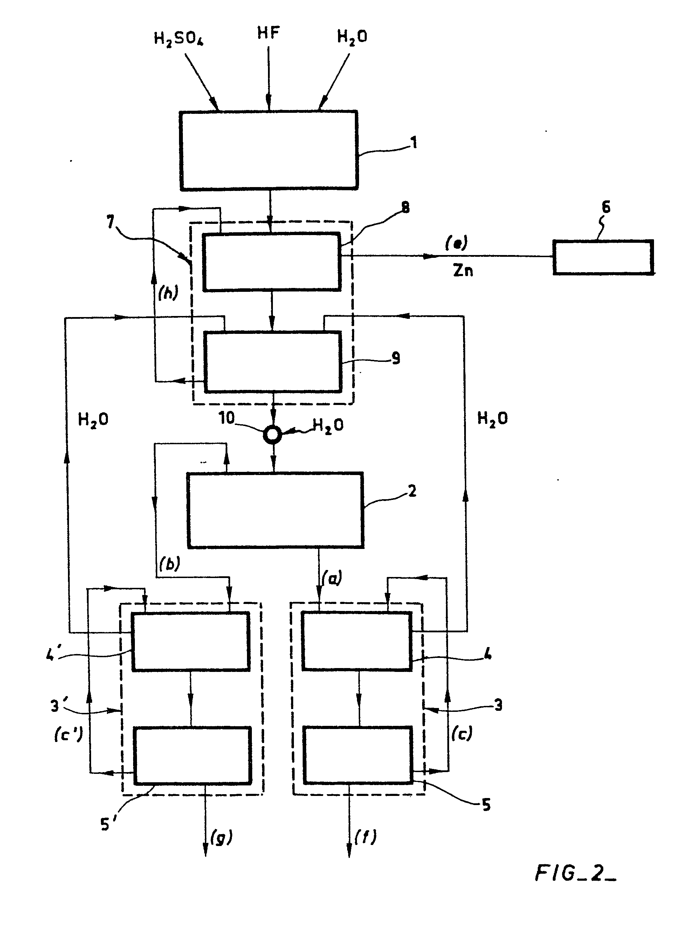

Le schéma de traitement représenté sur la figure 2 se distingue du précédent par la présence d'une phase de séparation solide-liquide 7 intermédiaire entre la lixiviation 1 et la classification granulométrique 2. Cette phase 7 se compose, de la façon classique, déjà rappelée plus haut, d'un étage de décantation désigné par 8, suivi d'un étage de filtration 9 dont le filtrat (h) est recirculé en 8.

Cette variante de réalisation du procédé selon l'invention présente par rapport à celle décrite précédemment les particularités essentielles qui vont suivre. La solution acide de sulfate de zinc (e) est extraite de l'étage de décantation 8, donc très tôt au cours du processus de traitement, avant l'opération de classification granulométrique 2. Ceci a notamment pour conséquence :

— d'une part, qu'il est nécessaire de repulper le gâteau de filtration issu de l'étage 9 avant de procéder à la séparation des fragments ferrifères des particules de sulfate de plomb dans la phase de classification granulométrique 2. Ce repulpage, symbolisé en 10 sur la figure peut se faire par toute méthode connue, par exemple, par adjonction d'eau ;

— d'autre part, que les opérations de séparation solide-liquide 3 et 3' en aval de la classification granulométrique 2, ne sont plus impératives pour l'obtention du résultat recherché par la présente invention. Elles ne présentent qu'un caractère facultatif selon que l'on souhaite ou non récupérer le fer (et le plomb) en suspension aqueuse. A cet égard, l'opération éventuelle de séparation solide-liquide 3 — c'est-à-dire, celle traitant la « sous-verse » ferrifère (a) — peut se limiter au premier étage de décantation 4 puisque la pulpe aqueuse ainsi recueillie peut avantageusement être recyclée sur une chaîne d'agglomération des minerais sans risque de pollution par le zinc ou le plomb.

3

L'option de l'une ou de l'autre variante de réalisation qui viennent d'être décrites, est bien entendu laissée au libre choix de l'utilisateur, qui l'effectuera en fonction de ses propres souhaits ou nécessités et en tenant compte de leurs avantages respectifs, lesquels peuvent être brièvement rappelés de la façon suivante :

### Variante de réalisation selon le schéma fonctionnel de la figure 1.

L'attaque à l'acide sulfurique, opérée dans la phase initiale de lixiviation modérée 1 étant exothermique, les conditions dans lesquelles s'opère la classification granulométrique 2 qui suit immédiatement sont dès lors, comme on le sait, améliorées.

Les opérations de décantation peuvent être accélérées par adjonction d'un floculant qui favorise l'agglomération des particules entre elles, dans la mesure où cette dernière ne nuit pas à l'étage de classification granulométrique qui les précède. Cet avantage disparaît lorsque la séparation solide-liquide intervient entre la phase de lixiviation et la classification granulométrique.

### Variante de réalisation selon le schéma fonctionnel de la figure 2.

Le repulpage aqueux 10 à la sortie de l'étape intermédiaire 7 de séparation solide-liquide permet d'ajuster la proportion du solide à une valeur optimale pour l'opération ultérieure de classification granulométrique. On peut ainsi travailler dans des conditions optimales de l'hydrocyclonage notamment.

De façon plus générale, on se trouve, au niveau de la classification granulométrique 2, dans une situation totalement indépendante de ce qui précède, donc présentant une grande souplesse d'action, puisque la solution acide de sulfate de zinc a déjà été extraite et que l'on ne risque plus, par exemple, d'abaisser la concentration en zinc lors de l'adjonction de l'eau de répulpage.

Il va de soi que l'invention n'est pas limitée par les exemples décrits.

En ce qui concerne les produits pouvant être traités, l'invention est d'application générale à toutes les poussières sidérurgiques et plus généralement métallurgiques, dans la mesure où elles contiennent des éléments utiles tels que le zinc, le plomb, le fer... et ceci quel que soit leur état hygrométrique (poussières sèches ou humides déjà sous forme de pulpe aqueuse), ou leur origine (poussières de hauts fourneaux sidérurgiques, de fours de conversion de la fonte, de fours électriques, etc...) ou de tout autre dispositif de traitement des métaux ferreux ou non.

Toutefois, dans le domaine sidérurgique, l'invention est d'application préférentielle aux poussières de hauts fourneaux. En effet, dans les poussières d'aciérie, le fer et le zinc peuvent être associés en ferrites ($ZnO—Fe_2O_3$). La dissolution complète du zinc implique une cassure de la structure ferritique, qui s'obtient généralement par attaque acide forte, responsable du passage du fer en solution.

Au contraire, dans le cas des poussières de hauts fourneaux, le zinc n'est pas lié au fer et se présente essentiellement sous forme oxydée (ZnO). La dissolution complète du zinc, pouvant alors s'effectuer par attaque acide modérée, présente ainsi un caractère sélectif et n'affecte pas sensiblement le fer.

A titre indicatif, des essais ont été effectués à partir de boues de hauts fourneaux contenant, en poids, 14 % de fer, 15 % de zinc et 4 % de plomb et traitées conformément à la première variante du procédé selon l'invention.

Ces boues ont d'abord été traitées à l'acide sulfurique à raison de 37 g d'$H_2SO_4$ pur (36 N) dilué avec 0,5 l d'eau environ pour 100 g de boues à traiter. Le traitement de lixiviation a duré 25 mn, jusqu'à l'obtention d'un pH de 4,5.

La classification granulométrique ultérieure s'est opérée par hydrocyclonage dont le seuil de coupure a été réglé à 20 μm environ.

Les résultats obtenus sont consignés dans le tableau ci-dessous.

La première ligne concerne le produit initial à traiter.

La seconde ligne concerne le résidu d'attaque à la fin de la phase de lixiviation. Les deux dernières lignes concernent le produit après classification granulométrique et se rapportent respectivement aux fractions granulométriques supérieures à 20 μm « sous-verse » (a) et inférieure « sur-verse » (b).

La première colonne indique les quantités pondérales ramenées à 100 g de produit initial, les trois colonnes suivantes contiennent les résultats d'analyses exprimés en pourcentages pondéraux. Les trois dernières colonnes montrent les répartitions relatives des éléments analysés dans les différentes étapes du procédé par rapport à une référence prise égale à 100.

4

| | Poids (en g.) | Analyses (en %) | | | Distribution | | |
|---|---|---|---|---|---|---|---|
| | | Fe | Pb | Zn | Fe | Pb | Zn |
| Produit initial | 100 | 14 | 4 | 15 | 100 | 100 | 100 |
| Résidu d'attaque | 54 | 25 | 7 | 1 | 98 | 100 | 5 |
| Sous-verse (a) | 40 | 29 | 0,7 | 0,3 | 84 | 7 | 1 |
| Sur-verse (b) | 14 | 14 | 23 | 4 | 14 | 93 | 4 |

Comme on peut facilement s'en rendre compte, les taux de récupération ont été de 93 % pour le plomb, de 84 % pour le fer et de 95 % pour le zinc — ce qui signifie que la quasi-totalité du zinc initialement contenue est passée en solution —, alors que seulement 2 % du fer initial a subi le même sort.

Selon les cas, des dispositions complémentaires doivent bien entendu être prises, mais qui s'imposeront naturellement à l'homme de métier sans qu'il éprouve de difficultés à les satisfaire puisqu'elles appartiennent toutes à son domaine de compétence habituel.

Lorsque les poussières à traiter contiennent plusieurs éléments solubles par attaque acide modérée, la récupération de ceux-ci passe par une phase de séparation, par exemple par précipitation sélective ou par électrolyse contrôlée avec dépôts métalliques séquentiels sur les électrodes, ou tout autre technique appropriée. De même, lorsque les poussières contiennent plusieurs éléments (ou composés) insolubles, attaqués ou non par l'acide, il est souhaitable que la fraction solide présente une granulométrie étagée en relation avec les éléments que lon désire récupérer séparément. Cette granulométrie étagée peut être naturelle, ou provoquée par l'attaque acide comme c'est le cas pour le fer et le plomb, ou par tout autre moyen adéquat. La classification granulométrique ultérieure s'effectue alors selon plusieurs opérations successives à seuil granulométrique évolutif.

Il va de soi que ces dispositions complémentaires peuvent être simplifiées si l'on souhaite, non pas une séparation complète de tous les éléments, mais seulement une séparation partielle portant sur quelques éléments prédéterminés, les autres pouvant par exemple être de faibl intérêt économique, ou peu préjudiciables à la réutilisation des éléments séparés.

Tel est le cas des poussières de hauts fourneaux dans lesquelles les éléments que l'on souhaite généralement récupérer sont, on l'a vu, au nombre de trois : le zinc, le fer et le plomb.

On voit là une nouvelle raison, d'ordre économique cette fois, d'appliquer préférentiellement l'invention au traitement des poussières de hauts fourneaux.

Il est à noter enfin que ces poussières sont de préférence à l'état humide, c'est-à-dire sous forme d'une boue, en raison des fortes concentrations de celle-ci en zinc (5 à 50 % en poids) et en plomb (1 à 10 %) par rapport aux poussières sèches (1 à 2 % de zinc et 0,2 à 0,5 % de plomb). Mais le procédé selon l'invention est également avantageux pour ces dernières, dont les faibles concentrations sont souvent à l'origine de l'inaptitude économique de leur traitement par d'autres procédés de récupération et qui entraînent leur mise au crassier.

A cet égard, l'invention apparaît donc, non seulement comme un moyen de valorisation des sous-produits sidérurgiques, mais encore comme un instrument de lutte contre la pollution de l'environnement par les usines sidérurgiques.

**Revendications**

1. Procédé de traitement hydrométallurgique des poussières métallurgiques contenant entre autres du fer, du zinc et du plomb, procédé comprenant une lixiviation dans un solvant acide et une séparation solide/liquide ultérieure, caractérisé en ce que la phase de lixiviation est réalisée avec un solvant acide ne mettant pas le plomb en solution et avec un pH de la solution acide en fin de réaction d'environ 4 ou 5, et en ce que l'on effectue une étape supplémentaire de séparation solide/solide dans laquelle une phase solide contenant du plomb est séparée de la phase solide contenant du fer.

2. Procédé selon la revendication 1, caractérisé en ce que l'étape de séparation solide/solide est intermédiaire entre la phase de lixiviation et la phase de séparation solide/liquide.

3. Procédé selon la revendication 1, caractérisé en ce que l'étape de séparation solide/solide s'effectue après la phase de séparation solide/liquide complétée par un repulpage de la fraction solide.

4. Procédé selon les revendications 1, 2 ou 3, caractérisé en ce que l'étape de séparation solide/solide consiste en une classification granulométrique.

5. Dispositif pour la mise en œuvre du procédé selon la revendication 1 comprenant un bac de lixiviation, un appareil de séparation solide/solide et un appareil de séparation solide/liquide montés en série à la suite du bac de lixiviation caractérisé en ce que l'appareil de séparation solide/solide (2) est placé entre le bac de lixiviation (1) et l'appareil de séparation solide/liquide (4,4'), et en ce que ledit appareil de séparation solide/solide (2) est un appareil de classification granulométrique, et en ce que ledit appareil de séparation solide/liquide comprend au moins deux séparateurs solide/liquide (4 et 4') placés l'un (4) à la sortie de la sous-verse (a) du séparateur solide/solide (2) et l'autre (4') à la sortie de la sur-verse (b) dudit séparateur solide/solide.

6. Dispositif pour la mise en œuvre du procédé selon la revendication 1 comprenant un bac de lixiviation, un appareil de séparation solide/solide et un appareil de séparation solide/liquide montés en série à la suite du bac de lixiviation, caractérisé en ce que l'appareil de séparation solide/liquide (7) est placé entre le bac de lixiviation (1) et l'appareil de séparation solide/solide (2), en ce que des moyens de repulpage (10) de la fraction solide sont interposés entre l'appareil de séparation solide/liquide (7) et l'appareil de séparation solide/solide (2), et montés sur la sortie « solide » dudit appareil de séparation solide/liquide (7), et en ce que un second appareil de séparation solide/liquide (4,4') est prévu à la sortie de l'appareil de séparation solide/solide (2), ledit second appareil solide/liquide comprenant au moins deux séparateurs solide/liquide, placés l'un (4) à la sortie de la sous-verse (a) du séparateur solide/solide (2), l'autre (4') à la sortie de la sur-verse (b) dudit séparateur solide/solide (7).

7. Dispositif selon les revendications 5 ou 6 caractérisé en ce que l'appareil de séparation solide/solide (2) est un hydrocyclone.

8. Application du procédé ou du dispositif de mise en œuvre selon l'une quelconque des revendications précédentes au traitement des poussières sèches ou humides produites par les hauts fourneaux sidérurgiques.

## Claims

1. A process for hydrometallurgical treatment of metal ducts, among others of iron, zinc and lead, process including lixiviation in an acid solvent and a subsequent solid-liquid separation, characterized in that the lixiviation phase is achieved with an acid solvent that does not solubilize the lead, with a pH of the acid solution, being about 4 or 5 as the reaction ends, and in that an additional solid-solid separation stage is performed during which a lead-containing solid phase is separated from the iron-containing phase.

2. A process, according to claim 1, characterized in that the solid-solid separation stage takes place in-between the lixiviation and the solid-liquid-separating phases, respectively.

3. A process, according to claim 1, characterized in that the solid-solid-separation stage is performed after the solid-liquid separation stage, concluded by repulping the solid fraction.

4. A process, according to claims 1, 2 and 3, characterized in that the solid-solid separation stage consists in a particle-size distribution.

5. A device, for implementing the process, according to claim 1, comprising a lixiviation tank and a solid-solid-separating means and a solid-liquid-separating means connected in series, following the lixiviation tank, characterized in that the solid-solid separating means (2) is set in-between the lixiviation tank (1) and the solid-liquid-separating means (4,4') and in that said solid-solid-separating means (2) is a device for determining particle-size distribution, and in that said solid-liquid separating means includes at least two solid-liquid separators (4 and 4'), one of which (4) at the exit of the bottom fraction (a) of the solid-solid separator (2) and the other at the exit (b) of the top fraction in said solid-solid separator.

6. A means for implementing the process, according to claim 1, comprising a lixiviation tank, a solid-solid separating and a solid-liquid-separating device connected in series, following the lixiviation tank, characterized in that the solid-liquid-separating device (7) is in-between the lixiviation tank (1) and the solid-solid-separating device (2), in that means for repulping (10) the solid fraction is in-between the solid-liquid-separating device (7) and the solid-solid-separating device (2) and connected to the « solid » exit of said solid-liquid device (7), and in that a second solid-liquid-separating device is provided at the exit of the solid-solid separating device (2), said second solid-liquid device including at least two solid-liquid separators, the first (4), at the exit of the bottom fraction (a) of the solid-solid separator (2), the other (4') at the exit of the top fraction (b) of said solid-solid separator (7).

7. A means, according to claims 5 or 6, characterized in that the solid-solid separating device (2) is a hydrocyclone.

8. Application of the process or of the implementing means, according to any of the foregoing claims relating to dry or damp ducts released by steelworks blast-furnaces.

## Ansprüche

1. Verfahren zur hydrometallurgischen Behandlung metallurgischer Stäube welche unter anderem Eisen, Zink und Blei enthalten, Verfahren bestehend aus einer Auslaugung in einem saueren Lösemittel und nachfolgender Trennung fest/flüssig dadurch gekennzeichnet dass die Auslaugephase mittels eines saueren Lösemittels durchgeführt wird welches das Blei nicht zur Lösung bringt, mit, bei Ende der Reaktion, ein pH-Wert der saueren Lösung von 4 oder 5, und dadurch dass ein weiterer Schritt durchgeführt wird zur Trennung von fest/fest bei welchen eine Blei enthaltende Feststoffphase von der Eisen enthaltenden Feststoffphase getrennt wird.

2. Verfahren gemäss Anspruch 1, dadurch gekennzeichnet dass der Trennschritt fest/fest sich zwischen der Auslaugephase und der Trennphase fest/flüssig befindet.

3. Verfahren gemäss Anspruch 1, dadurch gekennzeichnet dass der Trennschritt fest/fest nach der Trennphase fest/flüssig durchgeführt wird und derselbe durch eine Wiederintrübesetzung der festen Fraktion ergänzt wird.

4. Verfahren gemäss den Ansprüchen 1, 2 und 3, dadurch gekennzeichnet dass der Trennschritt fest/fest eine Kornklassierung aufweist.

5. Vorrichtung zur Durchführung des Verfahrens gemäss Anspruch 1 bestehend aus einem Auslaugebottich sowie einem Trennapparat fest/fest und einem Trennapparat fest/flüssig welche in Reihe im Anschluss an den Auslaugebottich angeordnet sind, dadurch gekennzeichnet dass der Trennapparat fest/fest (2) sich zwischen dem Auslaugebottich (1) und dem Trennapparat fest/flüssig (4, 4') befindet und dadurch dass der genannte Trennapparat fest/fest (2) ein Kornklassierungsapparat ist, und dadurch dass der genannte Trennapparat fest/flüssig aus wenigstens zwei Separatoren fest/flüssig (4 und 4') besteht, wobei der eine (4) am Austritt des unteren Auslaufs (a) (sous-verse) des Separators fest/fest (2) und der andere (4') am Austritt des Ueberlaufs (b) (sur-verse) des genannten Separators fest/fest angeordnet ist.

6. Vorrichtung zur Durchführung des Verfahrens gemäss Anspruch 1 bestehend aus einem Auslaugebottich, sowie einem Trennapparat fest/fest und einem Trennapparat fest/flüssig welche in Reihe im Anschluss an den Auslaugebottich angeordnet sind, dadurch gekennzeichnet dass der Trennapparat fest/flüssig (7) sich zwischen dem Auslaugebottich (1) und dem Trennapparat fest/fest (2) befindet und dadurch dass Wiederintrübesetzungsmittel (10) der festen Fraktion zwischen dem Trennapparat fest/flüssig (7) und dem Trennapparat fest/fest (2) angeordnet sind und diese Wiederintrübesetzungsmittel am Austritt « fest » des genannten Trennapparats fest/flüssig (7) angebracht sind und dadurch dass ein zweiter Trennapparat fest/flüssig (4,4') am Austritt des Trennapparates fest/fest (2) vorgesehen ist, wobei der genannte zweite Apparat fest/flüssig aus wenigstens zwei Separatoren fest/flüssig besteht, der eine (4) am Austritt des unteren Auslaufs (a) (sous-verse) des Separators fest/fest (2) und der andere (4') am Austritt des Ueberlaufs (b) (sur-verse) des genannten Separators fest/fest (7).

7. Vorrichtung gemäss den Ansprüchen 5 oder 6, dadurch gekennzeichnet dass der Trennapparat fest/fest (2) ein Wasserzyklon ist.

8. Anwendung des Verfahrens oder der Durchführungsvorrichtung gemäss irgendwelchem der vorhergehenden Ansprüche zwecks Behandlung trockener oder nasser Stäube die durch Hochöfen der Eisen und Stahlindustrie erzeugt werden.

$FIG\_1\_$

FIG_2_